# EUROPEAN PATENT APPLICATION

(11) **EP 4 485 617 A1**
(43) Date of publication of application: **01.01.2025**
(21) Application number: 23220675.5
(22) Date of filing: 29.12.2023
(51) Int. Cl.: H01M 10/48, H01M 50/503, H01M 50/507

(54) **CELLS CONTACT SYSTEM, BATTERY, AND ELECTRIC VEHICLE**

(30) Priority: 29.06.2023 CN 202321685915 U; 30.06.2023 CN 202321712437 U
(71) Applicant: Eve Energy Co., Ltd., Huizhou, Guangdong 516006 (CN)
(72) Inventor: LI, Caiyu, Huizhou, 516006 (CN)
(74) Representative: Nederlandsch Octrooibureau

(57) **Abstract**

The present disclosure provides a cells contact system (CCS) (1), a battery, and an electric vehicle. The CCS (1) includes: a support (100); one or more busbars (200) arranged on the support (100), where the busbars (200) are configured to be connected to cells; and an acquisition line (300) arranged on the support (100) and electrically connected to the busbars (200). The acquisition line (300) has a bent portion (310), and the support (100) is provided with an opening (110) corresponding to the bent portion (310).

## Description

The present application claims priorities to Chinese Patent Application No. 202321685915.1, filed with the China National Intellectual Property Administration on June 29, 2023, and Chinese Patent Application No. 202321712437.9, filed with the China National Intellectual Property Administration on June 30, 2023, which both are incorporated herein by reference in their entireties.

### TECHNICAL FIELD

The present disclosure relates to the field of battery technologies, and more specifically, to a cells contact system (CCS), a battery, and an electric vehicle.

### BACKGROUND

A cells contact system is mounted onto a battery module to acquire a voltage signal, a current signal, a temperature signal, and the like of the battery module. A flexible flat cable (FFC) is usually used as an acquisition line of the cells contact system and needs to be bent, so as to be connected to a busbar. However, a bent portion of the FFC is at high risk of breaking when being squeezed by an external force, which affects battery life.

### SUMMARY

The present disclosure provides a cells contact system, a battery, and an electric vehicle, which can reduce the risk of breaking the bent portion of the acquisition line and improving the battery life.

In a first aspect, an embodiment of the present disclosure provides a cells contact system, including: a support; one or more busbars arranged on the support and configured to be connected to cells; and an acquisition line arranged on the support and electrically connected to the busbars, where, the acquisition line includes a bent portion, and the support is provided with an opening corresponding to the bent portion.

In a second aspect, another embodiment of the present disclosure provides a battery, including the cells contact system as described above.

In a third aspect, yet another embodiment of the present disclosure provides an electric vehicle, including the battery as described above.

### BENEFICIAL EFFECTS

The embodiments of the present disclosure provide the cells contact system, the battery, and the electric vehicle. The opening is provided at a position on the support corresponding to the bent portion of the acquisition line. When the bent portion is squeezed by an external force, the opening may provide an avoidance space for the bent portion, so as to reduce the risk that the bent portion of the acquisition line is broken due to squeezing by the external force, thereby improving the service life of the acquisition line and further improving the battery life.

### BRIEF DESCRIPTION OF THE DRAWINGS

To describe the technical solutions in embodiments of the present disclosure more clearly, the accompanying drawings required for describing the embodiments are briefly described below. Apparently, the accompanying drawings in the following description show only some embodiments of the present disclosure, and a person skilled in the art may still derive other accompanying drawings from these accompanying drawings without creative efforts.
FIG. 1 is a schematic diagram of a structure of a cells contact system according to some embodiments of the present disclosure.
FIG. 2 is a schematic enlarged view of a part A of the cells contact system in FIG. 1.
FIG. 3 is a schematic enlarged view of a part B of the cells contact system in FIG. 1.
FIG. 4 is a schematic enlarged view of a part C of the cells contact system in FIG. 1.
FIG. 5 is a schematic enlarged view of a part D of the cells contact system in FIG. 1.
FIG. 6 is a schematic diagram of a structure of another cells contact system according to some embodiments of the present disclosure.
FIG. 7 is a schematic exploded view of the cells contact system in FIG. 6.
FIG. 8 is a partially enlarged schematic view of the cells contact system in FIG. 6.
FIG. 9 is an exploded view of a partially enlarged structure of the cells contact system in FIG. 8.

Reference numerals: 100-Support; 110-Opening; 200-Busbar; 201-Cell connection portion; 202-Cable connection portion; 203-Cable connection area; 204-Non-cable connection area; 205-Protective adhesive; 206-Connection sheet; 210-Output electrode busbar; 211-First cell connection portion; 212-First cable connection portion; 213-Fixed point; 214-Snap; 2111-Snap connection area; 2112-Non-snap connection area; 220-Series busbar; 221-Second cell connection portion; 222-Second cable connection portion; 300-Acquisition line; 310-Bent portion; 301. Main body portion; 302. First branch portion; 303. Second branch portion; 400-Circuit board; 410-Connector; 420. Second positioning hole; 1. Cells contact system; 10. Blister support; 11. First mounting groove; 12. Second mounting groove; 13. Third hot riveting stud; 101. First positioning hole; 102. First through hole; 103. Second through hole; 20. Plastic support; 21. Fixed portion; 22. Extension portion; 2101. First hot riveting stud; 2201. Second hot riveting stud; 30. Temperature sensor; 41. First output terminal; 42. Second output terminal; 50. Protective cover.

### DETAILED DESCRIPTION

Currently, a flexible flat cable (FFC) is usually used as an acquisition line of a cells contact system and needs to be bent, so as to be connected to a busbar. However, upper and lower surfaces of the bent portion of the FFC are respectively squeezed by an upper cover of the battery and a support, which leads to a high risk of breaking at the bent portion and affects battery life.

In view of this, the present disclosure provides a cells contact system, a battery, and an electric vehicle.

The cells contact system provided in the present disclosure may be described in detail with reference to specific embodiments and accompanying drawings.

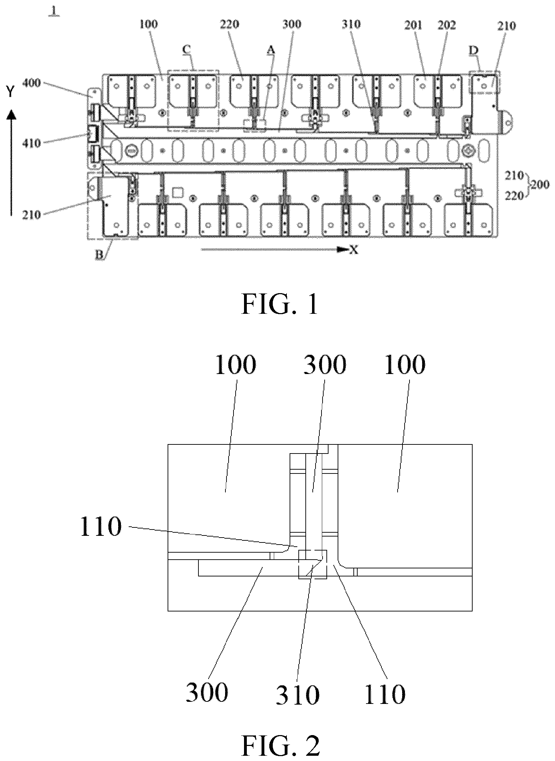

As shown in FIGS. 1 to 2, some embodiments of the present disclosure provide a cells contact system 1, including: a support 100; one or more busbars 200 arranged on the support 100 and configured to be connected to cells; and an acquisition line 300 arranged on the support 100 and electrically connected to the busbars 200; where the acquisition line 300 includes a bent portion 310, the support 100 is provided with an opening 110 corresponding to the bent portion 310, and an orthogonal projection of the bent portion 310 on the support 100 is within a range of the opening 110.

The cells contact system 1 is connected to the cells, and may be configured to acquire information, such as a voltage and a temperature of each of the cells, so as to monitor an operating state of each of the cells in the battery.

The support 100 may be arranged to have a planar structure. The planar structure is used to support the busbars 200 and the acquisition line 300. The busbar 200 and the acquisition line 300 are integrated onto the support 100, which facilitates assembling the battery.

The busbars 200 may be configured to be connected to the cells to enable a plurality of cells in the battery to form series or parallel structures, so as to acquire the information of each of the plurality of cells and monitor an operating state of each of the plurality of cells. The cells contact system 1 may include a plurality of busbars 200, where the plurality of busbars 200 may be aluminum bars. A material of the busbars is not limited in the present disclosure.

The acquisition line 300 is electrically connected to the busbars 200, so as to acquire signals, such as a voltage and a temperature of each of the cells, and output the signals, for example, transmit the signals, to a signal processing terminal. The acquisition line 300 is made of a flexible material. For example, the acquisition line 300 may be the FFC.

As shown in FIG. 1, the cells are arranged in a first direction (that is, in a thickness stacked direction of the cells), the busbars 200 are arranged in the first direction, the acquisition line 300 extends in the first direction, and one end of the acquisition line 300 close to the busbars 200 is bent in a second direction to be connected to the busbars 200. The first direction (X direction) intersects with the second direction (Y direction). In some embodiments, the second direction is perpendicular to the first direction, that is, the acquisition line 300 is bent at 90°.

The acquisition line 300 needs to be bent to be connected to each of the busbars 200, and a crease is arranged at the bent portion of the acquisition line 300. When a side of the bent portion 310 of the acquisition line 300 away from the support 100 is subject to an external force, such as a pressure action from an upper cover of the battery, a side of the bent portion 310 close to the support 100 and the side of the bent portion 310 away from the support 100 are both squeezed, causing the crease of the acquisition line 300 to be easily broken due to the squeezing force, which affects normal operation of the cells contact system and further affects the service life of the battery.

As shown in FIG. 2, an opening 110 is provided at a position on the support 100 corresponding to the bent portion 310 of the acquisition line 300 in the present disclosure. When the bent portion 310 is squeezed by an external force, the opening 110 may provide a space for avoidance and buffering for the bent portion 310, so as to reduce the risk that the bent portion 310 is broken due to squeezing by the external force, thereby improving the service life of the acquisition line and further improving the battery life.

In an embodiment, a distance between an edge of the opening 110 and an edge of the bent portion 310 ranges from 1 mm to 2 mm, so that a range of the opening 110 is slightly larger than that of the bent portion 310, so as to avoid interference with the support 100 when the bent portion 310 is squeezed by the upper cover of the battery and deviates toward a side of the opening 110, and avoid affecting supporting performance of the support 100 due to the excessive range of the opening 110.

In an embodiment, as shown in FIG. 1, each of the busbars 200 includes a cell connection portion 201 and a cable connection portion 202 connected to the cell connection portion 201. The cell connection portion 201 is connected to respective one of the cells, and the cable connection portion 202 is connected to the acquisition line 300.

The cable connection portion 202 is sunk toward a side close to the support 100, and a height difference between a plane where the cable connection portion 202 is located and a plane where the cell connection portion 201 is located ranges from 1 mm to 2 mm.

The cable connection portion 202 is sunk, so that the plane where the cable connection portion 202 is located is lower than the plane where the cell connection portion 201 is located. The acquisition line 300 is connected to a sinking portion of the cable connection portion 202, so that an occupied space of both the acquisition line 300 and the busbar 200 in a direction perpendicular to the busbar 200 can be reduced, so as to avoid interference between a junction of the acquisition line 300 and the busbar 200 and the upper cover of the battery.

In some embodiments, each of the cells includes two opposite end surfaces and one or more side surfaces located between the two end surfaces. Each of the cells includes a pole protruding from one of the end surfaces. Each of the busbars 200 is arranged on one of the end surfaces of respective one of the cells having a pole and is electrically connected to the pole. Therefore, the cable connection portion 202 may be arranged between poles of two adjacent ones of the cells. A distance between two adjacent poles is greater than a width of the cable connection portion 202 in a direction parallel to the busbars 200 (X direction), so that the cable connection portion 202 can be accommodated between the two adjacent poles. For example, when a distance between the two adjacent poles is 54 mm, a designed width of the cable connection portion 202 needs to be less than 54 mm. According to the present disclosure, a space between the two adjacent poles is used to accommodate the sunk cable connection portion 202, so that the space can be properly used, so as to reduce a mounting height in the direction perpendicular to the busbar 200.

In some embodiments, two adjacent ones of the cells are arranged at intervals. That is, a gap is formed between side surfaces of the adjacent cells, and the cable connection portion 202 may be arranged into the gap. A distance between the side surfaces of the two adjacent cells is greater than the width of the cable connection portion 202 in the direction parallel to the busbar 200, so that the cable connection portion 202 can be accommodated between the side surfaces of the two adjacent cells. According to the present disclosure, the gap between the side surfaces of two adjacent cells is used to accommodate the sunk cable connection portion 202, so that the space can be properly used, so as to reduce a mounting height in the direction perpendicular to the busbar 200.

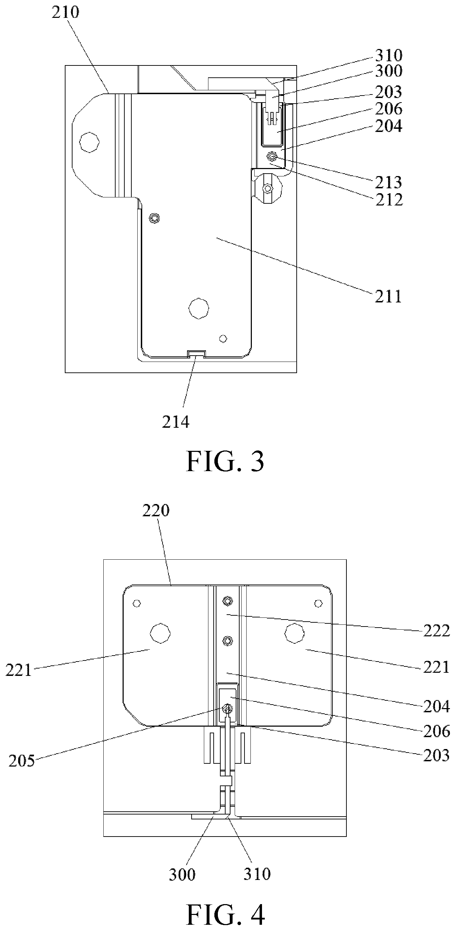

In some embodiments, as shown in FIGs. 3 to 4, the cable connection portion 202 includes a cable connection area 203 and a non-cable connection area 204. The acquisition line 300 is connected to the cable connection area 203, and a thickness of the cable connection area 203 is less than a thickness of the non-cable connection area 204.

Because the acquisition line 300 and the busbar 200 are usually connected by welding, adhesive often needs to be dispensed at a welded portion for protection, but due to lack of space, the protective adhesive 205 may exceed the height and interfere with the upper cover of the battery. Therefore, in the present disclosure, the connection area between the cable connection portion 202 and the acquisition line 300 is thinned to enable the thickness of the cable connection area 203 to be less than the thickness of the non-cable connection area 204, so as to provide space for the protective adhesive 205 and avoid the interference between the height of the protective adhesive 205 and the upper cover of the battery.

In some embodiments, the thickness of the cable connection area 203 is 0.5 mm to 1 mm less than the thickness of the non-cable connection area 204. For example, when the thickness of the non-cable connection area 204 is 1.5 mm, the thickness of the cable connection area 203 may be set to 1 mm. The cable connection area 203 is thinned by a range of 0.5 mm to 1 mm, which may provide space for the protective adhesive 205 and avoid the interference between the protective adhesive 205 and the upper cover, and may not cause the cable connection area 203 to be too thin to affect basic performance thereof.

In some embodiments, a thickness of the protective adhesive 205 in the direction perpendicular to the busbar 200 is less than 2 mm. The thickness of the protective adhesive 205 is controlled to prevent the protective adhesive 205 from being excessively thick and interfering with the upper cover. For example, the thickness of the protective adhesive 205 arranged in the cable connection area 203 may be set to 1.5 mm, 1.8 mm, or the like, so as to ensure a basic protective effect thereof while reducing the thickness of the protective adhesive 205. Specifically, the thickness of the protective adhesive 205 may be designed based on an actual process.

In some embodiments, a material of the protective adhesive 205 may be UV adhesive, which is not limited in the present application.

The thickness of the protective adhesive 205 is controlled to avoid the interference between the protective adhesive 205 and the upper cover of the battery and optimize the spatial layout of the busbar 200.

In some embodiments, a connection sheet 206 is arranged between the acquisition line 300 and the cable connection portion 202, and the connection sheet 206 is arranged on the busbar 200 and configured to connect the acquisition line 300 to the busbar 200. In some embodiments, the connection sheet 206 is arranged in the cable connection area 203, and the acquisition line 300 is electrically connected to the connection sheet 206. The connection sheet 206 may be a nickel sheet, which is not limited in the present.

In some embodiments, as shown in FIG. 1, a plurality of busbars 200 include two output electrode busbars 210 and a plurality of series busbars 220. The two output electrode busbars 210 are respectively located at two ends of the support 100 in a first direction (X direction), and the plurality of series busbars 220 are located between the two output electrode busbars 210.

In some embodiments, as shown in FIG. 1, two rows of busbars 200 are arranged on the support 100, each row of busbars 200 includes a plurality of series busbars 220 and an output electrode busbar 210, and the output electrode busbar 210 is located at one end of the two ends of the row of busbars 200. Two output electrode busbars 210 of two adjacent rows of busbars 200 are respectively located at two ends of the support 100 in the first direction (X direction). One of the two output electrode busbars 210 is connected to a positive electrode of each of the cells and the other is connected to a negative electrode of the cell. Each of the series busbars 220 is connected to two adjacent ones of the cells respectively, so that a plurality of cells is configured to form a series structure.

As shown in FIG. 3, the output electrode busbar 210 includes a first cable connection portion 212 and a first cell connection portion 211. The first cable connection portion 212 is located at an edge of the first cell connection portion 211. The first cell connection portion 211 is fixedly connected to respective one of the cells, the first cable connection portion 212 is fixedly connected to the support 100, and the acquisition line 300 is connected to the first cable connection portion 212.

As shown in FIG. 4, each of the series busbars 220 includes a second cable connection portion 222 and two second cell connection portions 221. The second cable connection portion 222 is located between the two second cell connection portions 221, and the two second cell connection portions 221 are fixedly connected to two cells adjacent to the two second cell connection portions 221 respectively. The second cable connection portion 222 is fixedly connected to the support 100, and the acquisition line 300 is connected to the second cable connection portion 222.

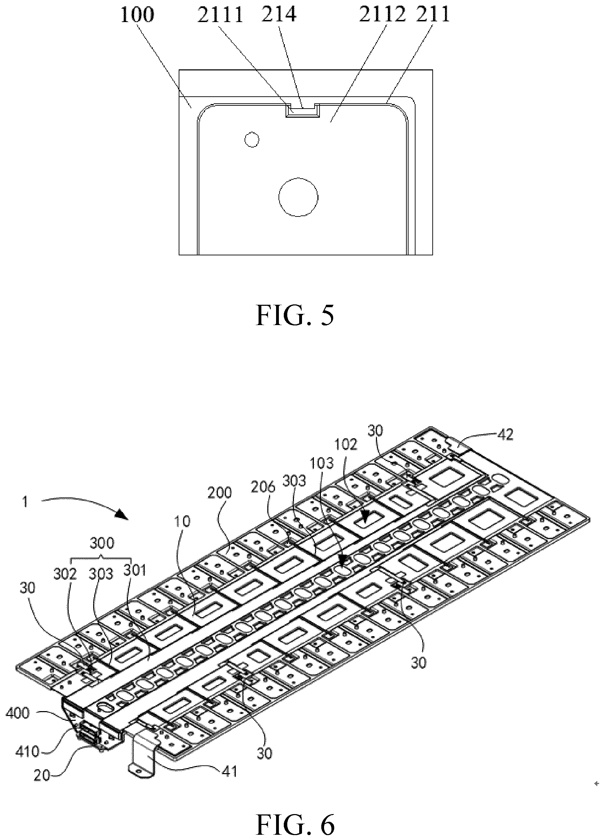

In some embodiments, as shown in FIG. 5, the output electrode busbar 210 is connected to the support 100 by a snap.

Because the output electrode busbar 210 is located at an end of the support 100, the output electrode busbar 210 is usually fixed to the support 100 in a manner of a single point. As shown in FIG. 3, a fixed point 213 between the output electrode busbar 210 and the support 100 is usually located at the first cable connection portion 212, but no fixed connection point exists between the first cell connection portion 211 and the support 100. Therefore, the output electrode busbar 210 is prone to the risk of unexpected falling. In the present disclosure, a snap 214 is arranged on the support 100, and the first cell connection portion 211 is fixed to the support 100 through the snap 214, so as to prevent the output electrode busbar 210 from unexpectedly falling.

In some embodiments, the output electrode busbar 210 is provided with a snap connection area 2111 and a non-snap connection area 2112. A thickness of the snap connection area 2111 is less than a thickness of the non-snap connection area 2112.

The snap connection area 2111 of the output electrode busbar 210 is thinned to reduce a mounting height of the snap 214 in a direction perpendicular to the busbar 200, so as to fix the output electrode busbar 210 to the support 100 through the snap 214 in a limited mounting space.

In some embodiments, the thickness of the snap connection area 2111 is 0.5 mm to 1 mm less than the thickness of the non-snap connection area 2112. For example, when the thickness of the non-snap connection area 2112 is 1.5 mm, the thickness of the snap connection area 2111 may be set to 1 mm. The snap connection area 2111 is thinned by a range of 0.5 mm to 1 mm, which may provide assembly space for the snap and avoid the interference between the snap and the upper cover, and may not cause the snap connection area 2111 to be too thin to affect basic performance thereof.

In some embodiments, as shown in FIG. 1, the cells contact system includes a Printed Circuit Board 400 (PCB). One end of the acquisition line 300 is electrically connected to the printed circuit board 400, and another end of the acquisition line 300 is bent toward the busbars 200 to be electrically connected to the busbars 200. In some embodiments, the printed circuit board 400 may be a printed circuit board.

In some embodiments, as shown in FIG. 1, the circuit board 400 is located at an end of the support 100, and the acquisition line 300 is located at the same side of a row of busbars 200. The acquisition line 300 includes a plurality of wires. An end of each of the wires is led out from the circuit board 400, bent when extending to respective one of the busbars 200, and extends toward the busbar 200 to be electrically connected to the busbar 200.

In some embodiments, the cells contact system includes a connector 410. The connector 410 is arranged on the circuit board 400 and electrically connected to the circuit board 400. The connector 410 is configured to transmit an acquired signal to a Battery Management System (BMS).

Referring to FIG. 6, the support 100 includes a blister support 10 and a plastic support 20. The circuit board 400 is fixed to the plastic support 20 and electrically connected to the acquisition line 300.

The blister support 10 is integrally formed using a blister process. The blister support 10 may be made of a plastic material, such as polycarbonate (PC) and acrylonitrile-styrene-butadiene copolymer (ABS), which is not limited in the present disclosure. The blister process has the advantages of low mold costs, a short production period, and a short mold development time (generally only 3 to 5 days), which greatly reduces the mold cost and development period. Moreover, compared with the plastic support 20, the blister support 10 has light simple parts, which is beneficial to reduce the weight of the cells contact system 1, thereby reducing the weight of the battery, increasing energy density of a battery system, and improving endurance of a product.

The acquisition line 300 is fixed to a first end surface of the blister support 10. The acquisition line 300 is a flexible flat cable. For example, the acquisition line 300 is a flexible flat cable (FFC). The busbars 200 are also fixed to the first end surface of the blister support 10, and the busbars 200 are arranged on two sides of the acquisition line 300. The busbars 200 on either of the sides is electrically connected to the acquisition line 300.

The plastic support 20 is arranged on a second end surface of the blister support 10 and is fixedly connected to the blister support 10, and the plastic support 20 is formed by injection molding. The second end surface is adjacently connected to the first end surface, and the plastic support 20 being arranged on the second end surface of the blister support 10 means that the plastic support 20 is arranged at a position of the second end surface of the blister support 10, so that the plastic support 20 is close to the second end surface of the blister support 10. However, it does not mean that the plastic support 20 needs to be fixed to or located at the second end surface of the blister support 10. The circuit board 400 is fixed to the plastic support 20 and electrically connected to the acquisition line 300.

In this embodiment, a portion of the plastic support 20 in the cells contact system 1 is replaced with the blister support 10 where the blister support 10 has the advantages of low mold costs, convenient mold repair or modification, a short mold design and manufacturing period, and low costs, which resolves the problem of high costs caused by using the plastic support 20 in the cells contact system assembly in the related art. Moreover, compared with the plastic support 20, the blister support 10 has light simple parts, which is beneficial to reduce the weight of the cells contact system 1, thereby reducing the weight of the battery, increasing energy density of a battery system, and improving endurance of a product. In addition, a portion of the plastic support 20 is reserved in the cells contact system 1 of the present disclosure, to fix the circuit board 400, and can play a better role in mounting and limiting during assembling of the cells contact system assembly.

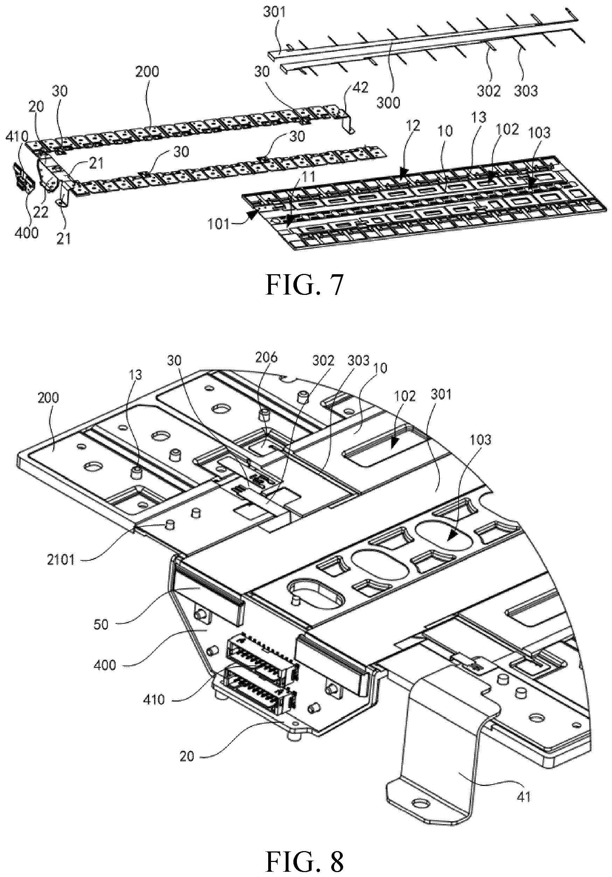

In some embodiments, referring to FIG. 6 and FIG. 7, a middle portion of the first end surface of the blister support 10 is provided with a first mounting groove 11, and the acquisition line 300 is located in the first mounting groove 11 and fixed to the blister support 10. In some embodiments, a side of the acquisition line 300 close to the blister support 10 is provided with a back adhesive, and the acquisition line 300 is stuck and fixed to the first mounting groove 11 through the back adhesive. The first mounting groove 11 of the blister support 10 is used to define a mounting position of the acquisition line 300, and the side of the acquisition line 300 close to the blister support 10 is provided with the back adhesive, so that the acquisition line 300 can be firmly mounted to the first mounting groove 11.

The acquisition line 300 extends from the blister support 10 to the plastic support 20 and is connected to the circuit board 400 on the plastic support 20.

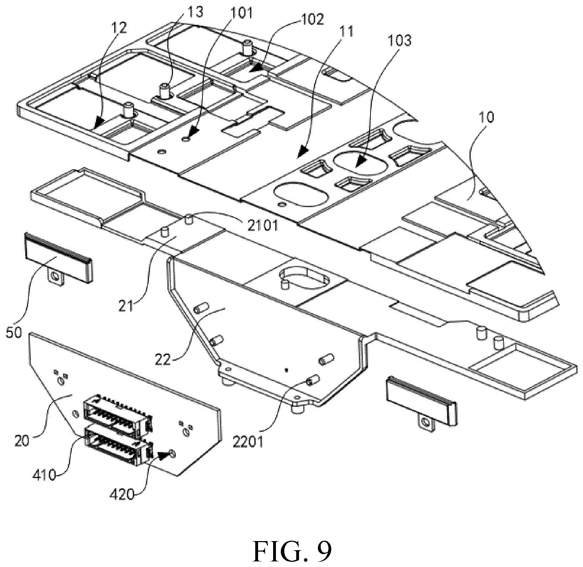

Referring to FIG. 8 and FIG. 9, the plastic support 20 includes a fixed portion 21 and an extension portion 22. The fixed portion 21 is fixed to a third end surface of the blister support 10. The extension portion 22 extends from the fixed portion 21 in a direction away from the blister support 10. The first end surface and the third end surface are two opposite end surfaces on the blister support 10. The second end surface is connected to the first end surface and the third end surface. That is, the first end surface and the third end surface are respectively an upper surface and a lower surface of the blister support 10, and the second end surface is a side surface of the blister support 10. However, an extending direction of the extension portion 22 is a direction parallel to a direction of the first end surface pointing to the third end surface.

In some embodiments, the fixed portion 21 is provided with a plurality of first hot riveting studs 211, and the blister support 10 is provided with a plurality of first positioning holes 101 respectively corresponding to the first hot riveting studs 211. The first hot riveting studs 211 are respectively fitted to the first positioning holes 101 to fix the fixed portion 21 to the blister support 10, so that the plastic support 20 is fixed to the third end surface of the blister support 10. The plastic support 20 and the blister support 10 are connected by hot riveting, which can enhance the connection stability of the plastic support 20 and the blister support 10, facilitate the positioning of the plastic support 20 and the blister support 10 during connection of the plastic support 20 to blister support 10, improve accuracy of position connection, and achieve high operation convenience.

The extension portion 22 has a mounting surface. The mounting surface faces away from the blister support 10, and the circuit board 400 is mounted to the mounting surface. In some embodiments, the mounting surface of the extension portion 22 is provided with a plurality of first hot riveting studs 221, and the circuit board 400 is correspondingly provided with a plurality of second positioning holes 420. The first hot riveting studs 221 pass through the second positioning holes 420 respectively to fix the circuit board 400 to the extension portion 22. The acquisition line 300 extends from the blister support 10 to the mounting surface and is electrically connected to the circuit board 400. Alternatively, a protective cover 50 is arranged at a position where the acquisition line 300 is connected to the circuit board 400, and the protective cover 50 is configured to protect the acquisition line 300.

In the present disclosure, the blister support 10 and the plastic support 20 are connected, so that the portion of the plastic support 20 is reserved in the cells contact system 1 to fix the circuit board 400, which can play a better role in mounting and limiting of the cells contact system 1 during assembling of the cells contact system 1.

Still referring to FIGS. 6 to 9, the cells contact system 1 includes a plurality of temperature sensors 30. Each of the temperature sensors 30 is connected between respective one of the busbars 200 and the acquisition line 300. The acquisition line 300 includes a main body portion 301 and both a first branch portion 302 and a second branch portion 303 connected to the main body portion 301. One end of the first branch portion 302 is connected to the main body portion 301, and another end of the first branch portion 302 is connected to the temperature sensors 30. One end of the second branch portion 303 is connected to the main body portion 301, and another end of the second branch portion 303 is connected to the busbars 200.

The first branch portion 302 is configured to acquire a temperature signal with each of the temperature sensors 30, and the second branch portion 23 is configured to acquire a voltage signal with the connection sheet 206. The temperature signal acquired by the first branch portion 302 and the voltage signal acquired by the second branch portion 303 are transmitted to the connector 410 on the circuit board 400 through the main body portion 301.

In some embodiments, the connection sheet 206 is mounted to the first end surface of the busbar 200. A copper conductor located at the end of the second branch portion 303 is wholly in contact with the connection sheet 206 of the busbar 200 and is soldered with the connection sheet 206, so that the second branch portion 303 is connected to the busbar 200 through the connection sheet 206. The busbar 200 includes an aluminum bar.

Two sides of the first end surface of the blister support 10 are provided with a plurality of integrally formed second mounting grooves 12 located at two sides of the first mounting groove 11. At least two vertically upward third hot riveting studs 13 are arranged in each of the second mounting grooves 12, and a plurality of vertically penetrating third positioning holes are arranged on the busbar 200. The third positioning holes of the busbar 200 position and mount the busbar 200 in the second mounting groove 12 through the third hot riveting studs 13 of the blister support 10. The second mounting groove 12, the third hot riveting studs 13 of the blister support 10 and the third positioning holes on the busbar 200 improve reliability of fixing the busbar 200. The busbar 200 is fixed to the blister support 10 by hot riveting, which can effectively prevent the busbar 200 from falling off the acquisition structure before welding with cells. In addition, the mounting grooves of the blister support 10 are effectively used to position the acquisition line 300 and the busbar 200, so that a height difference between the acquisition line 300 and the busbar 200 is reduced, the welding difficulty is reduced, and production efficiency is effectively improved.

It may be understood that, to reduce a weight of the cells contact system 1, a first through hole 102 and a second through hole 103 may be provided on the blister support 10. The first through hole 102 is located between the acquisition line 300 and the busbar 200, and the second through hole 103 is located between two acquisition lines 300. The first through hole 102 and the second through hole 103 are formed by hollowing out the blister support 10.

The present disclosure provides a battery, including a cell assembly and the cells contact system 1 as described above. The cells contact system 1 is mounted to an upper end of the cell assembly, and busbars 200 are welded to the upper end of the cell assembly by laser.

The cell assembly includes a plurality of cells arranged in an array. An end of each of the cells includes a pole, and the cells contact system is arranged on the end of the cell assembly having the pole. Positive poles and negative poles of the plurality of cells are distributed in two rows. The blister support 10 is arranged on a pole end of each of the cells, and the positive pole and the negative pole of each of the cells respectively protrude from the blister support 10 to be connected to respective one of the busbars 200.

For example, a group of cells is formed by two cells. Positive poles of the group of cells are located in the same row, and their negative poles are located in the same row. Positive poles of two adjacent groups of cells are located in different rows. That is, a positive pole of a first cell and a positive pole of a second cell are both located at the same side, a positive pole of the third cell and a positive pole of the fourth cell are located at another side, and so on. The positive poles of a first group of cells are connected in parallel through respective one of the busbars 200, negative poles of the first group of cells and positive poles of a second group of cells are connected in series through respective one of the busbars 200, and negative poles of the second group of cells and positive poles of a third group of cells are connected in series through respective one of the busbars 200 until negative poles of a last group of cells are connected in parallel through respective one of the busbars 200. A first output terminal 41 is led out from the busbar 200 connected to the first group of cells, and a second output terminal 42 is led out from the busbar 200 connected to the last group of cells. That is, the first output terminal 41 is a positive electrode of the battery, and the second output terminal 42 is a negative electrode of the battery. The first output terminal 41 is located at the second end surface of the blister support 10, and the second output terminal 42 is located at a fourth end surface of the blister support 10. The fourth end surface is connected to the first end surface and the third end surface, and the fourth end surface is opposite to the second end surface.

It may be understood that, in the present embodiment of the present disclosure, a portion of the plastic support 20 in the cells contact system 1 is replaced with the blister support 10, where the blister support 10 has the advantages of low mold costs, convenient mold repair or modification, a short mold design and manufacturing period, and low costs, which resolves the problem of high costs caused by using the plastic support 20 in the cells contact system assembly in the related art. Moreover, compared with the plastic support 20, the blister support 10 has light simple parts, which is beneficial to reduce the weight of the cells contact system 1, thereby reducing the weight of the battery, increasing energy density of a battery system, and improving endurance of a product. In addition, a portion of the plastic support 20 is reserved in the cells contact system 1 of the present disclosure, to fix the circuit board 400, and can play a better role in mounting and limiting of the cells contact system assembly during assembling of the cells contact system assembly.

The cells contact system 1 includes: a support 100; one or more busbars 200 arranged on the support 100, where the busbars 200 are configured to be connected to cells; and an acquisition line 300 arranged on the support 100 and electrically connected to the busbars 200, where the acquisition line 300 includes a bent portion 310, and the support 100 is provided with an opening 110 corresponding to the bent portion 310.

In some embodiments, the battery includes a housing and an upper cover. The housing is provided with an accommodating cavity, and a cell assembly and the cells contact system 1 are both accommodated in the accommodating cavity. The housing has an open side opposite to the cells contact system 1, and the upper cover covers the open side and is fixedly connected to the housing.

The battery may be a square battery, which is not limited in the present disclosure.

The present disclosure provides an electric vehicle including the battery described above.

The embodiments of the present disclosure provide the cells contact system, the battery, and the electric vehicle. The opening is provided at a position on the support corresponding to the bent portion of the acquisition line. When the bent portion is squeezed by an external force, the opening may provide an avoidance space for the bent portion, so as to reduce the risk that the bent portion of the acquisition line is broken due to squeezing by the external force, thereby improving the service life of the battery.

## Claims

1. A cells contact system (1), comprising:
a support (100);
one or more busbars (200) arranged on the support (100), wherein each of the busbars (200) is configured to be connected to respective one of cells; and
an acquisition line (300) arranged on the support (100) and electrically connected to the busbars (200);
wherein the acquisition line (300) comprises a bent portion (310), and the support (100) is provided with an opening (110) corresponding to the bent portion (310).

2. The cells contact system (1) of claim 1, wherein the acquisition line (300) extends in a first direction (X), an end of the acquisition line (300) close to the busbars (200) is bent in a second direction (Y) and connected to the busbars (200), and the first direction (X) intersects with the second direction (Y).

3. The cells contact system (1) of claim 1, wherein each of the busbars (200) comprises a cell connection portion (201) and a cable connection portion (202) connected to the cell connection portion (201), the cell connection portion (201) is configured to be connected to respective one of the cells, the cable connection portion (202) is configured to be connected to the acquisition line (300); the cable connection portion (202) is sunk toward a side close to the support (100), and a height difference between a top surface of the line connection portion (202) and a top surface of the cell connection portion (201) ranges from 1 mm to 2 mm.

4. The cells contact system (1) of claim 3, wherein each of the cells comprises two opposite end surfaces, and a pole of the cell protrudes from one of the end surfaces; and
a plurality of cells and a plurality of busbars (200) are provided, the plurality of busbars (200) are arranged in an extension direction of the acquisition line (300), a distance between poles of two adjacent ones of the cells is greater than a width of the line connection portion (202) in a direction parallel to an arrangement direction of the busbars (200), and the cable connection portion (202) is arranged between poles of two adjacent ones of the cells.

5. The cells contact system (1) of claim 3, wherein each of the cells comprises two opposite end surfaces and one or more side surfaces between the two end surfaces; and
a plurality of cells and a plurality of busbars (200) are provided, the plurality of busbars (200) are arranged in an extension direction of the acquisition line (300), a distance between side surfaces of two adjacent ones of the cells is greater than a width of the cable connection portion (202) in a direction parallel to an arrangement direction of the busbars (200), and the cable connection portion (202) is arranged between the side surfaces of the two adjacent cells.

6. The cells contact system (1) of claim 3, wherein the cable connection portion (202) comprises a cable connection area (203) and a non-cable connection area (204), the acquisition line (300) is connected to the cable connection area (203), and a thickness of the cable connection area (203) is less than a thickness of the non-cable connection area (204).

7. The cells contact system (1) of claim 3, wherein the number of the busbars (200) is three or more, two ones of the busbars (200) respectively located at two ends of the support (100) in a first direction (X) are output electrode busbars (210), and remaining ones of the busbars (200) respectively located between the two output electrode busbars (210)are series busbars (220);
either of the output electrode busbars (210) comprises a first cable connection portion (212) and a first cell connection portion (211), wherein the first cable connection portion (212) is located at an edge of the first cell connection portion (211), and the first cell connection portion (211) is connected to respective one of the cells; and
each of the series busbars (220) comprises a second cable connection portion (222) and two second cell connection portions (221), wherein the second cable connection portion (222) is located between the two second cell connection portions (221), and the two second cell connection portions (221) are respectively connected to two ones of the cells.

8. The cells contact system (1) of claim 7, wherein either of the output electrode busbars (211) is provided with a snap connection area (2111) and a non-snap connection area (2112), and a thickness of the snap connection area (2111) is less than a thickness of the non-snap connection area (2112).

9. The cells contact system (1) of any of claims 3-8, wherein a protective adhesive (205) is arranged at a junction of the acquisition line (300) and the cable connection portion (202), and a thickness of the protective adhesive (205) in a direction perpendicular to the busbars (200) is less than 2 mm.

10. The cells contact system (1) of claim 1, wherein the support (100) comprises a blister support (10) and a plastic support (20), both sides of the acquisition line (300) are provided with the busbars (200), the acquisition line (300) and the busbars (200) are both fixed to a first end surface of the blister support (10), the busbars (200) on either of the sides are electrically connected to the acquisition line (300); the plastic support (20) is arranged on a second end surface of the blister support (10) and fixedly connected to the blister support (10), and the second end surface is adjacently connected to the first end surface; and
the cells contact system (1) comprises a circuit board (400), and the circuit board (400) is fixed to the plastic support (20) and electrically connected to the acquisition line (300).

11. The cells contact system (1) of claim 10, wherein the plastic support (20) comprises a fixed portion (21) and an extension portion (22), the fixed portion (21) is fixed to a third end surface of the blister support (10), and the extension portion (22) extends from the fixed portion (21) in a direction away from the blister support (10).

12. The cells contact system (1) of claim 11, wherein the fixed portion (21) is provided with a plurality of first hot riveting studs (2101), the blister support (10) is provided with a plurality of first positioning holes (101) corresponding to the first hot riveting studs (2101), and the first hot riveting studs (2101) are fitted to the first positioning holes (101), respectively, to fix the fixed portion (21) to the blister support (10).

13. The cells contact system (1) of claim 11, wherein the extension portion (22) has a mounting surface facing away from the blister support (10), the circuit board (400) is mounted onto the mounting surface, and the acquisition line (300) extends from the blister support (10) onto the mounting surface and is electrically connected to the circuit board (400).

14. A battery, comprising the cells contact system (1) of any of claims 1-13.

15. An electric vehicle, comprising the battery of claim 14.
